# EUROPEAN PATENT APPLICATION

(11) **EP 2 634 328 A2**
(43) Date of publication of application: **04.09.2013**
(21) Application number: 13156116.9
(22) Date of filing: 21.02.2013
(51) Int. Cl.: E04H 9/14, E06B 9/00

(54) **Flood protection device and use thereof**

(30) Priority: 01.03.2012 GB 201203640
(71) Applicant: Kelly, Frank, Droitwich Worcestershire WR9 0PX (GB)
(72) Inventor: Kelly, Frank, Droitwich Worcestershire WR9 0PX (GB)
(74) Representative: Jackson, Derek Charles

(57) **Abstract**

A flood protection device comprises a tray having a base (1), side walls (3) and an outwardly protruding lip (5) extending around the side walls in a region of the side walls spaced from the base. A plurality of formations (7) is defined on the base, the formations having a range of different dimensions, for indicating the locations and sizes of openings to be made through the base for the passage of services through the device.

## Description

This invention relates to a flood protection device, and more particularly relates to a flood protection device for sealing service entry points to a building. The invention also relates to the use of the device.

It is conventional building practice in the United Kingdom to provide a common entry/exit point for most or all of the services to and/or from a building. Such services may include, for example, water, gas, electricity, telephone and sewage. Such services generally enter and leave the building by way of a gap provided in the foundations and which is topped by a lintel. Unfortunately, the opening through which the service cables, pipes and ducting pass is relatively large and cannot readily be sealed.

It is therefore an object of the present invention to provide a flood protection device which overcomes, or at least ameliorates, this disadvantage.

According to the present invention there is provided a flood protection device comprising a tray having a base, side walls and an outwardly protruding lip extending around the side walls in a region thereof spaced from the base, wherein a plurality of formations is defined on the base, the formations having a range of different dimensions, for indicating the locations and sizes of openings to be made through the base for the passage of services through the device.

The tray may be a substantially rectangular tray. The base may be substantially planar. The outwardly protruding lip may be provided along edges of the side walls remote from the base.

The formations serve to distinguish from the remainder of the base. The formations may be substantially hemispherical and may extend from the base in the opposite direction to the side walls. Alternatively, the formations may be in the form of a plate displaced from the plane of the base and connected to the base by a cylindrical wall. As further alternatives, the surface of the formations may have a different texture to the remainder of the base, may be identified by a peripheral rim, may be in the form of a depression in the surface of the base, or may be in the form of plugs which are separable from the base by a user.

The formations may be circular, having a range of different diameters. For example, the formations may have diameters of 25 mm, 50 mm, 75 mm, 100 mm and 150 mm.

The present invention also relates to a method of using the flood protection device defined hereinabove, including the steps of installing the device in an aperture in a building and sealing the device in place.

The method may include providing a seal between the peripheral lip of the device and the building.

The method may include, when a service is to pass through the device, the steps of identifying a suitable formation, and removing the formation to provide an opening through the device for the service. The method may include the further step of sealing between the service and the periphery of the opening in order to prevent the ingress of water through the device.

For a better understanding of the present invention and to show more clearly how it may be carried into effect reference will now be made, by way of example, to the accompanying drawings in which:

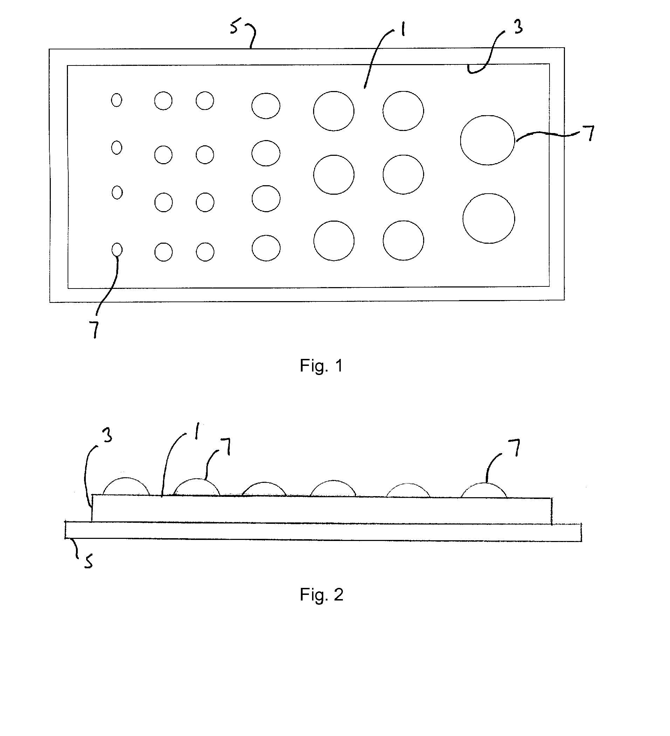

Figure 1 is an elevational view of one embodiment of a flood protection device according to the present invention;

Figure 2 is a side view of the flood protection device shown in Figure 1;

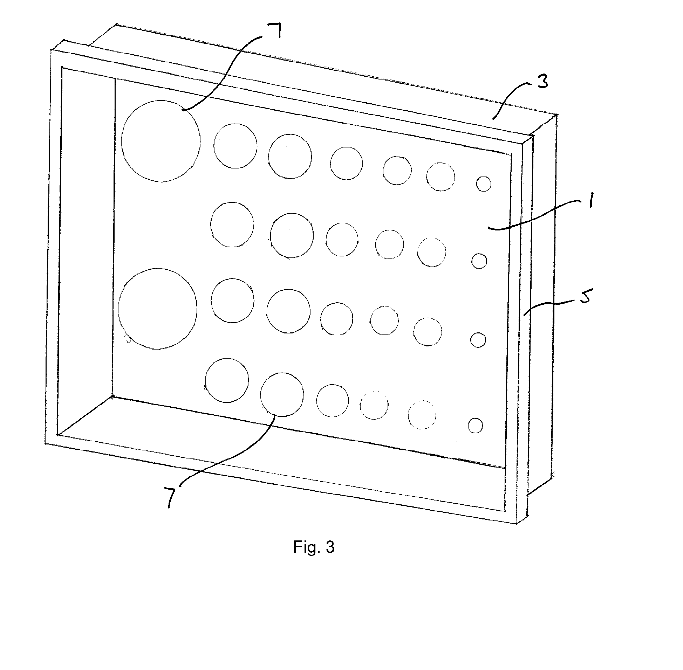

Figure 3 is a perspective view, from one side, of the flood protection device shown in Figures 1 and 2; and

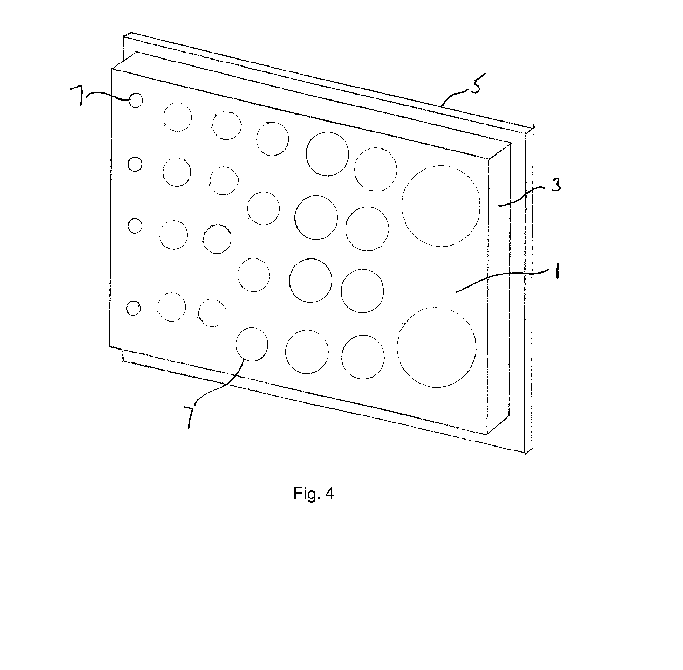

Figure 4 is a perspective view, from the other side, of the flood protection device shown in Figures 1 to 3.

The flood protection device shown in the figures comprises a substantially rectangular tray having a substantially planar base 1 and side walls 3, the side walls being formed with a laterally outwardly protruding peripheral lip 5 along edges thereof remote from the base. That is, the lip 5 lies in a plane substantially parallel to the base 1. The base 1 is formed with a plurality of formations 7 of predetermined sizes. It should be noted the tray could be other than rectangular. The device may be made of plastics material, such as vacuum formed ABS plastics having a suitable thickness to resist the pressure of flood water, such as about 5 to 6 mm, and the dimensions of the tray may be about 1000 mm by 450 mm, although other dimensions are possible.

As shown in the figures, the formations 7 are substantially hemispherical and extend from the base 1 in the opposite direction to the side walls 3, although they could alternatively extend in the same direction as the side walls.

Instead of being hemispherical, the formations could be in the form of a plate displaced from the plane of the base and connected to the base by a short cylindrical wall (for example a few millimeters). Other configurations could be used for the formations 7 provided they distinguish from the surrounding area of the base. For example, the surface of the formations could have a different texture to the remainder of the base, could be identified by a peripheral rim, or could be in the form of a depression in the surface of the base. The formations might also be in the form of plugs which are separable from the base by a user, but not under the pressure of flood water (for example by having a head with a larger dimension that the opening through which the plug passes).

The formations 7 are preferably circular in outline because the majority of services will be of a similar shape where they will pass through the device. The formations have a number of different dimensions, in practice different diameters, to accommodate different services. That is, the formations may have diameters of 25 mm, 50 mm, 75 mm, 100 mm and 150 mm. Other dimensions are also possible.

In use of the flood protection device according to the present invention, the device is installed in a suitable aperture in the building and is sealed in place in order that water should not pass around the device. The peripheral lip 5 assists in this respect and, if desired, a seal may be provided between the peripheral lip and the building. When a service is to pass through the device, a suitable formation is identified, for example having a dimension slightly less than one of the formations, and a user can remove the formation, for example with a jig saw or by drilling a line of holes, and pass the service cable, pipe or the like through the opening in the device. Any space around the service, between the service and the periphery of the opening that has been created, can be sealed in order to prevent the ingress of flood water or other water through the device. Any further services can subsequently be passed through others of the formations in a similar manner.

## Claims

1. A flood protection device comprising a tray having a base (1), side walls (3) and an outwardly protruding lip (5) extending around the side walls in a region thereof spaced from the base, wherein a plurality of formations (7) is defined on the base, the formations having a range of different dimensions, for indicating the locations and sizes of openings to be made through the base for the passage of services through the device.

2. A flood protection device as claimed in claim 1, wherein the tray is a substantially rectangular tray.

3. A flood protection device as claimed in claim 1 or 2, wherein the base (1) is substantially planar.

4. A flood protection device as claimed in any preceding claim, wherein the outwardly protruding lip (5) is provided along edges of the side walls (3) remote from the base (1).

5. A flood protection device as claimed in any preceding claim, wherein the formations (7) are substantially hemispherical and extend from the base (1) in the opposite direction to the side walls (3).

6. A flood protection device as claimed in any preceding claim, wherein the formations (7) are in the form of a plate displaced from the plane of the base (3) and connected to the base by a cylindrical wall.

7. A flood protection device as claimed in any preceding claim, wherein the surface of the formations (7) has a different texture to the remainder of the base (1).

8. A flood protection device as claimed in any preceding claim, wherein the formations (7) are identified by a peripheral rim.

9. A flood protection device as claimed in any preceding claim, wherein the formations (7) are in the form of a depression in the surface of the base (1).

10. A flood protection device as claimed in any preceding claim, wherein the formations (7) are in the form of plugs which are separable from the base (1) by a user.

11. A flood protection device as claimed in any preceding claim, wherein the formations (7) are circular, having a range of different diameters.

12. A method of using the flood protection device as claimed in any preceding claim, including the steps of installing the device in an aperture in a building and sealing the device in place.

13. A method according to claim 12 and including the step of providing a seal between the peripheral lip (5) of the device and the building.

14. A method according to claim 12 or 13 and including, when a service is to pass through the device, the steps of identifying a suitable formation (7), and removing the formation to provide an opening through the device for the service.

15. A method according to claim 14 and including the further step of sealing between the service and the periphery of the opening in order to prevent the ingress of water through the device.
